# EUROPEAN PATENT SPECIFICATION

(11) **EP 2 895 252 B1**
(45) Date of publication and mention of the grant of the patent: **06.02.2019**
(21) Application number: 12799545.4
(22) Date of filing: 05.12.2012
(51) Int. Cl.: B01D 46/12, B01D 46/00, B01D 46/52

(54) **A FILTER FRAME**
RAHMEN FÜR FILTER
CADRE FILTRANT

(30) Priority: 12.09.2012 WO PCT/EP2012/067746; 21.09.2012 WO PCT/EP2012/068707
(43) Date of publication of application: 22.07.2015
(73) Proprietor: Camfil AB, 111 34 Stockholm (SE)
(72) Inventor: LANS, Erik, S-619 33 Trosa (SE)
(74) Representative: AWA Sweden AB
(86) International application number: PCT/EP2012/074548
(87) International publication number: WO 2014/040659

(56) References cited:
- EP-A1- 1 582 248
- WO-A1-01/97946
- WO-A1-2010/151580
- DE-A1- 2 739 815
- US-A- 3 494 113
- US-A1- 2009 193 773
- US-A1- 2012 011 817

## Description

### FIELD OF THE INVENTION

The present invention relates to filter assemblies for removing particles from an air flow, and more particularly to a filter frame for receiving a media pack, a filter frame assembly, and a method of securing a filter frame assembly to a filter bank.

### BACKGROUND OF THE INVENTION

Filter assemblies comprising media packs disposed in a frame structure are known. A media pack is typically formed from a sheet of filter media, e.g. a fiberglass sheet, or a nonwoven polyester sheet or membrane media or combinations thereof or the like, which is pleated to increase the effective filtering area of the filter body, and provided with cover plates. To provide mechanical support and/or to combine a plurality of media packs, the media pack is typically arranged in a frame structure.

A prior art filter frame for receiving several media packs is shown in US-6955696, which discloses a filter frame comprising two gable plates, which have male connection elements, and two frame beams having female connection elements, which are interconnected with the male connection elements of the gable plates. Thereby a square frame is formed which supports the media packs. In other words, the media packs rest on the frame beams and on support structures of the gable plates. However, that structure requires a high rigidity of the two frame beams and a high stiffness of the media pack due to the small contact area with the frame. It would be desired to be able to mitigate these requirements. A further V-type filter frame having a front plate and two gable plates is disclosed in WO2010/151580.

### SUMMARY OF THE INVENTION

It is an object of the present invention to provide a filter frame that eliminates, or at least reduces the drawbacks mentioned above.

The object is achieved by a filter frame according to the present invention as defined in claim 1 of the appended claims. The object is also achieved by a filter frame assembly as defined in claim 11 and a method of assembling a filter bank as defined in claim 12 of the appended claims.

Thus, in accordance with a first aspect of the present invention there is provided a V-type filter frame for receiving a filter media pack and arranged to be mounted to a filter bank grid. The V-type filter frame comprises first and second gable plates and a front plate which is coupled to the gable plates. The gable plates each comprises a front edge portion, located upstream an airflow, and an opposite rear edge portion, located downstream an airflow, and an inner surface, facing the inner clean side of the filter assembly, and an outer surface, facing the outer soiled side of the filter assembly. The gable plates further comprises an abutment surface extending outwardly from said outer surface. This abutment surface is arranged to abut a filter bank grid when mounted thereto. The provision of an abutment surface on the gable plate ensures that the forces acting on the filter frame, originating from the air flow through the filter media, can be transmitted by the gable plates directly to the filter bank grid. Many previously known filter frame assemblies are constructed such that the forces are transmitted from the filter media to the gable plates and then forwarded to a front plate and only then to the filter bank grid. That solution makes heavy demands on the adhesive coupling between the gable plates and the front plate which in a worst case scenario could break and in any case there is a immediate risk of air flow leakage between the gable plates and the front plate, which of course is inconvenient in a filter assembly. By directing the forces acting on the gable plate directly to the filter bank grid, as it is done by the present invention, this risk is minimized and the sealing properties of the front plate can be maintained at all times.

The abutment surface is provided in the form of a flange extending along said outer surface.

In accordance with an embodiment of the V-type filter frame, the abutment surface is additionally extending along at least one side edge of the gable plate.

In accordance with an embodiment of the V-type filter frame, the gable plate has at least one V-shaped plate portion extending between a front edge portion and an opposite rear edge portion of the gable plate, with the mouth of the V shaped portion facing the front edge portion, said at least one V-shaped portion being defined by a channel arranged to receive a gable of a media pack.

The front plate comprises a sealing surface arranged to abut a filter bank grid. The provision of a sealing surface on the front plate ensures optimal sealing properties between the filter bank grid and the filter frame..

In accordance with an embodiment of the V-type filter frame, the sealing surface of the front plate is arranged to be substantially flush with the abutment surface of the gable plate. This means that while the gable plates will carry the main loads occurring during use of the filter assembly, the front plate will still carry a minor amount of the loads such that sealing between front plate and filter bank grid can be is ensured.

In accordance with an embodiment of the V-type filter frame, a sealing member is provided at the sealing surface of the front plate.

In accordance with an embodiment of the V-type filter frame, the sealing member comprises a compressible sealing strip.

In accordance with an embodiment of the V-type filter frame, the sealing surface of the front plate is arranged outwardly adjacent the abutment surface of the gable plate.

In accordance with an embodiment of the V-type filter frame, the front plate is coupled to the gable plates by means of a snap-lock element. A mechanical locking element such as a snap-lock will allow a person working with the mounting of the filter assembly to handle the frame assembly even before an adhesive has been supplied thereto.

In accordance with an embodiment of the V-type filter frame, the front plate is coupled to the gable plates by means of an adhesive. The provision of an adhesive has a number of advantages. Among others, the adhesive provides excellent sealing properties such that no air can escape between the gable plates and the front plate. Further, it holds the gable plates and the front plate together. In combination with the snap-lock element, the mere presence of an adhesive in the space between gable plates and front platewill ensure that the snap-lock element cannot snap out of its locked position, thereby increasing the rigidity of the structure.

In accordance with an embodiment of the V-type filter frame, a rear plate is engaged with rear edge portions of the first and second gable plates by means of a snap lock element. Similar to the use of snap-lock element between the front plate and gable plates, this makes the structure easier to handle during assembly.

In accordance with second aspect of the present invention, a filter frame assembly comprising a filter frame as described herein and at least one media pack arranged in the filter frame is provided.

In accordance with third aspect of the present invention, a method of assembling a filter bank is provided. The method comprises the following steps:
- providing a filter bank grid comprising at least one opening for a filter frame;
- providing a V-type filter frame comprising a front plate and first and second gable plates mounted to the front plate, wherein said gable plates comprises an abutment surface extending outwardly from an outer surface thereof and wherein the front plate comprises a sealing surface;
- providing a media pack in the filter frame;
- mounting said filter frame with media pack to the filter bank grid such that the abutment surface of the gable plates and the sealing surface of the front plate abut the filter bank grid.

### BRIEF DESCRIPTION OF THE DRAWINGS

The invention will now be described in more detail and with reference to the appended drawings in which:
Fig. 1a is a schematic exploded view of an embodiment of a filter assembly according to the invention;
Fig. 1b is a perspective view of the filter assembly of Fig. 1a;

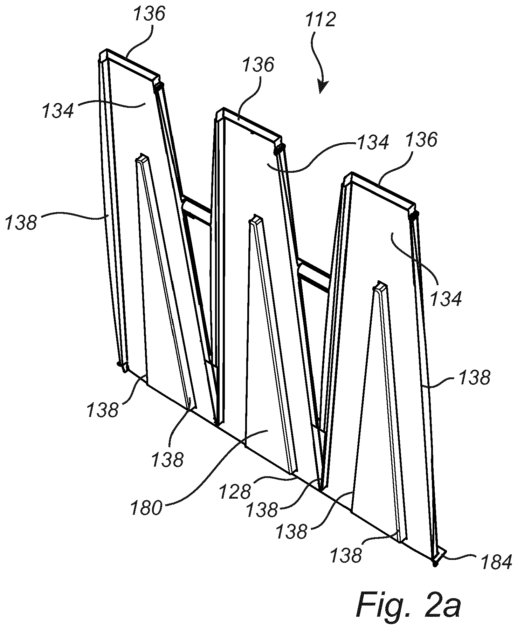

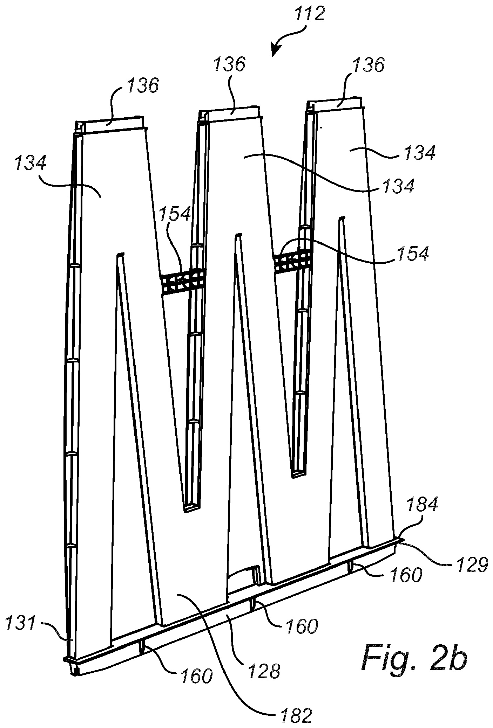

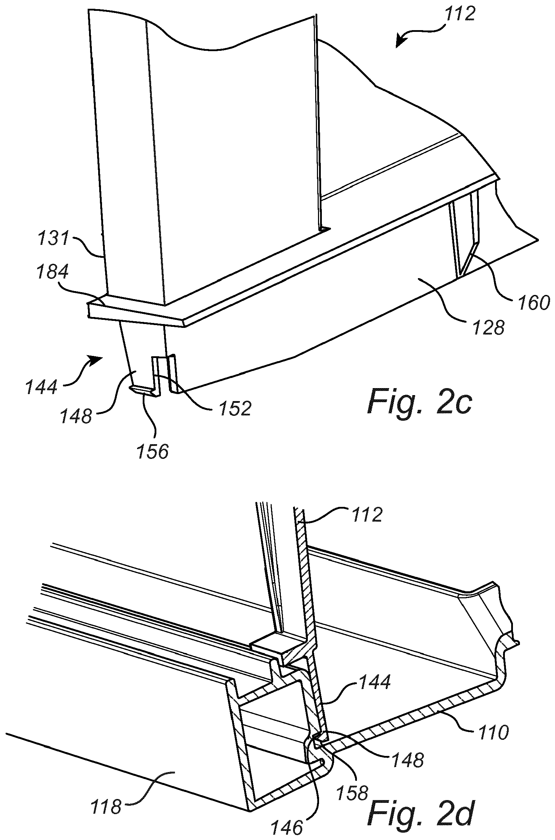

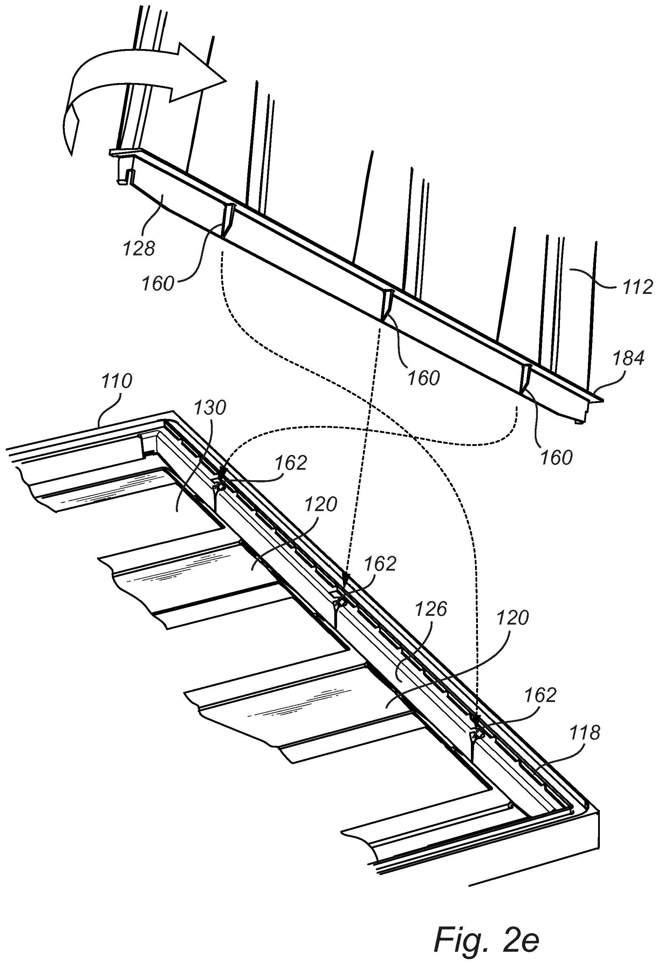

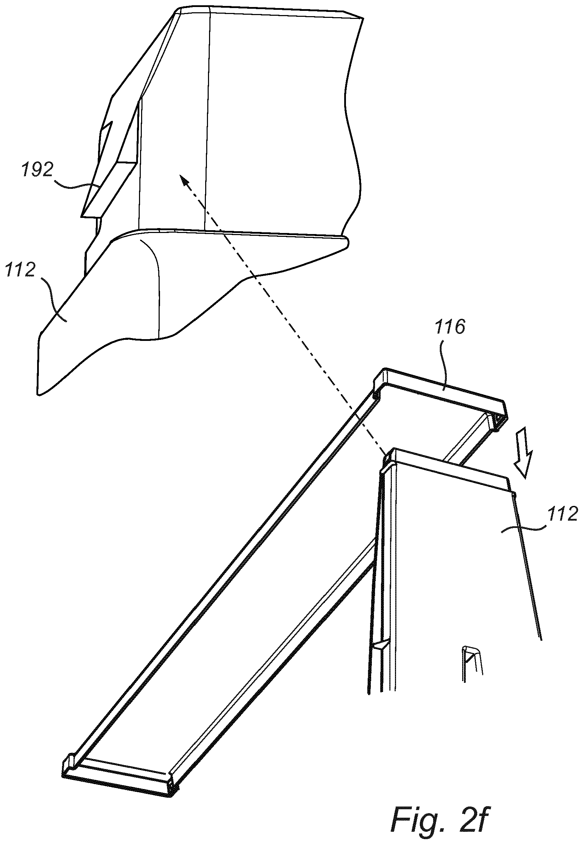

Figs. 2a-2f are schematic views of filter frame parts of the filter assembly.
Fig. 3 is a schematic cross-section of filter frame parts according to the invention.

### DESCRIPTION OF PREFERRED EMBODIMENTS

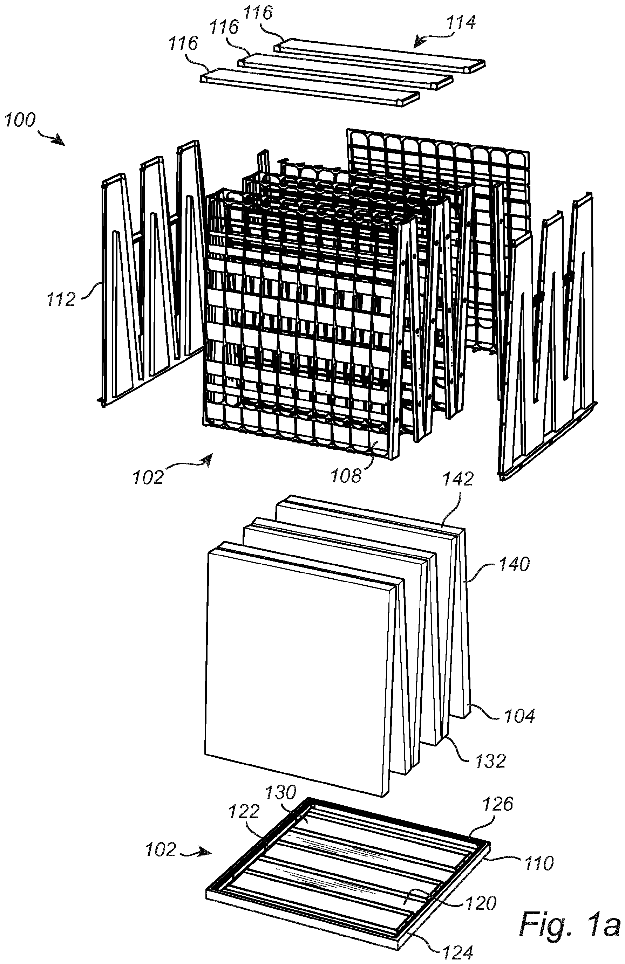

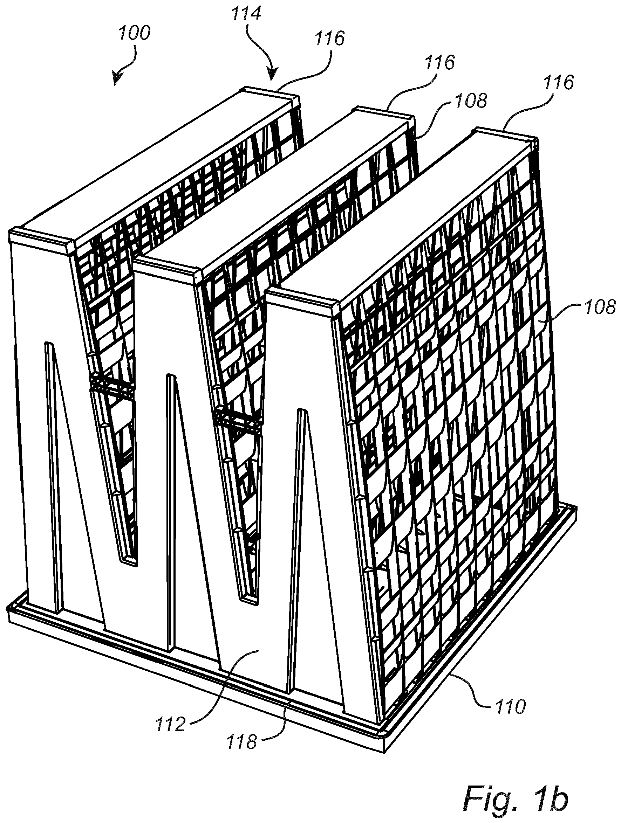

According to an embodiment of the filter assembly 100, it comprises an embodiment of the filter frame 102, and several, in this embodiment six, media packs 104 carried by the filter frame 102 whereby the media packs 104 have been shown separately in figure 1a for reasons of clarity. The media packs 104 can be of any suitable kind, but typically each media pack 104 comprises a sheet of filter media 106, which has been pleated to an accordion shape in order to increase the effective filtering area of the filter body, and backing nets 108 containing the pleated sheet of filter media 106. Backing nets 108 are arranged to let air pass through the filter media 106, or even arranged to guide the passing air in a preferred direction and optimized for low pressure drop thereover.

The filter frame 102 comprises a front plate 110, two gable plates 112, and a rear plate 114, embodied by three separate plate elements 116. The front plate 110 is rectangular and comprises a peripherally extending rim 118, and parallel ribs 120 extending between opposite ends 122, 124 of the front plate 110. The front plate 110 has a groove 126 at each of the ends 122, 124. Each groove 126 extends along a respective portion of the rim 118 at an inside thereof, and adjacent thereto. The gable plates 112 are arranged at the opposite ends 122, 124 of the front plate 110. Each gable plate 112 has a front edge portion 128, which has been received in the groove 126. Each gable plate 112 extends perpendicular to the front plate 110, and rearwards therefrom. The media packs 104 are plate shaped and extend obliquely substantially in the direction of the air flow from the front plate 110, although they extend close to perpendicular to the front plate 110. The media packs 104 are arranged side by side, leaning alternately to one side and to the other side, thereby forming a zigzag structure. More particularly, they are arranged in pairs, each pair forming a V shape, such that the mouth of the V shape faces the front plate 110. A front edge 132 of each media pack 104 abuts against one of the ribs 120, and apertures 130 between the ribs 120 are aligned with the mouths of the V shapes. Each gable plate 112 has three V-shaped portions 134 extending between the front edge portion 128 and an opposite rear edge portion 136 of the gable plate 112, with the mouth of each V-shaped portion 134 facing the front edge portion 128. The V-shaped portions 134 are joined along a minor fraction of their length, extending from the mouth towards the other end, while there are gaps between them along a major part of their length. Reinforcing elements 154 may be provided extending between two adjacent V-shaped portions to further increase the structural rigidity of the gable plate 112. These reinforcing elements 154 can also serve as grips when handling the gable plates 112 or (semi-) assembled filter frame assemblies 100. Each V-shaped portion 134 is defined by a channel, having side walls 138. Each V-shaped channel has received gable portions, or side edge portions, 140 of two media packs 104. Of course, it is also possible within the scope of the appended claims for the gable plates 112 to have additional or less than three V-shaped prortions, such as one, two, four or more. Also, the gable plates 112 may not have V-shaped portions at all but may for example be provided in the form of covering having a trapezoid shape or similar without openings between adjacent pairs of media packs. Each plate element 116 of the rear plate 114 covers rear edge portions 142 of two media packs 104 forming a V-shape. The plate elements 116 each extend between, and are attached to, a respective fraction of the rear edge portion 136 of each gable plate 112. Consequently, the front plate 110, the gable plates 112, and the rear plate 114 support each other to form a strong filter frame 102, which carries the media packs 104.

An important part of the filter frame structure is the engagement between the gable plates 112 and the front plate 110. As mentioned above, each one of the gable plates 112 has been received in a respective groove 126 of the front plate 110. In order to secure a proper engagement between the front plate 110 and the gable plates 112, each gable plate is provided with a retainment member 144, and the front plate 110 is provided with a complementary retainment member 146 for each gable plate 112. The retainment member 144 of each gable plate 112 comprises a snap-lock element 148 at either side of the gable 112, and more particularly at each end of the front edge portion 128, at a side edge 129, 131 of the gable plate 112. The snap-lock element 148 comprises a resilient tongue 152, which extends perpendicular or at an angle to a front edge of the gable plate, and which has a shoulder 156. The complementary retainment member 146 comprises a recess 158, which is arranged at the rim 118 of the front plate 110. The shoulder 156 has been received in the recess 158. Thereby the gable plate 112 is in fixed engagement with the front plate 110. However, in order to further enhance the stability of the engagement, the retainment member 144 further comprises three protrusions 160, which protrude from the front edge portion 128 perpendicular to the primary extension of the gable plate 112. The protrusions 160 are distributed along the length of the front edge portion 128. The complementary retainment member 146 further comprises three notches 162, which are arranged at the rim 118 of the front plate 110, one notch at each respective protrusion. The protrusions 160 have been received in the notches 162. Each protrusion 160 is wedge-shaped, and each notch 162 is V-shaped. The sizes of the protrusions 160 and the notches 162 are such that they are connected to each other in a press fit when the gable plate 112 is inserted into engagement with the front plate 110. The snap-lock elements 148 and the press fit connection between the protrusions 160 and notches 162 ensure a reliable coupling between the gable plates 112 and the front plate 110 even without the use of any adhesives such that the filter frame can be handled, e.g. lifted and moved around, without the need of any temporary securing means or similar. It should be noted that as regards the retainment member 144, the number of protrusions 160 can range from zero to several, and the number of snap-lock elements 148 can range from zero to several as well. It is desired to have at least one snap-lock element or protrusion, and it is preferred to have two snap in elements with the shown placement and at least one protrusion.

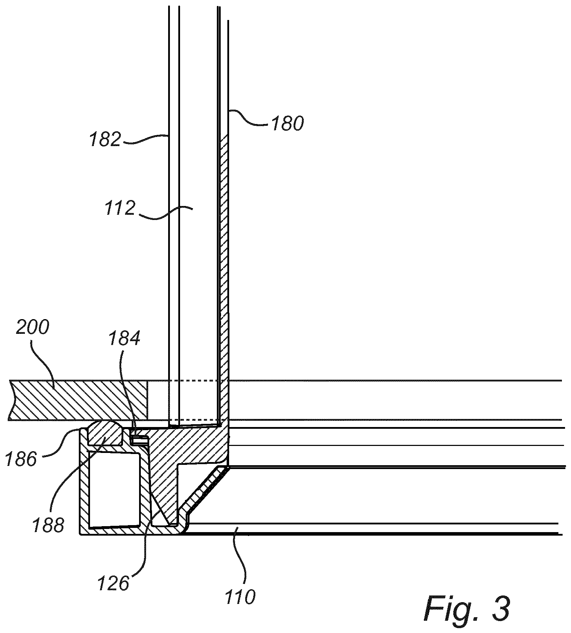

In figure 3 it is shown that the gable plates 112 each comprises an abutment surface 184 near the front edge portion 128. This abutment surface 184 is intended to bear against a filter bank grid 200, made for example from steel beams, when mounted thereto. The front plate 110 is provided with a sealing surface 186 having a sealing member 188, here in the form of a sealing strip made from polyurethane or similar. The sealing surface 186 is flush with the abutment surface 184 when the gable plates 112 are mounted to the front plate 110 such that both surfaces will bear against the filter bank grid when mounted thereto. It should be noted that in figure 3, for reasons of clarity, the abutment surface 184 of the gable plate 112 and sealing surface 186 of the front plate 110 is not yet in contact with the filter bank grid 200. Instead, figure 3 shows a position where the sealing member 188 barely touches the grid 200. It is also possible, and sometimes preferable, to arrange the sealing surface 186 of the front plate 110 forwardly displaced relative the abutment surface 184. If, for example, a thick and/or less compressible sealing member 188 is used, too much load may be transferred to the front plate 110 if the sealing surface 186 and abutment surface 184 are arranged flush with each other. By arranging the sealing surface 186 somewhat forwardly displaced relative the abutment surface 184, the abutment surface 186 will reach the front surface of grid 200 earlier, thus not requiring excessive compression of the sealing member 188. As will be described below, the filter frame assembly is to be fastened by means of clamps or similar that firmly squeeze the filter frame assembly against the filter bank grid 200. When this is done the sealing member 188 will be compressed and the abutment surface 184 of the gable plate will bare against the filter bank grid 200 in a load absorbing manner. This results in that the forces originating from the air flowing through the filter media will be transmitted directly from the media pack 104 to the gable plates 112 and thereafter to the filter bank grid and only a minor part of these forces, if any at all, will be transmitted to the filter bank grid by the front plate 110. This is favorable since the connection and sealing between the front plate 110 and gable plates 112 will not be exposed to any substantial stress thereby avoiding air leakage between them. The abutment surface 184 is here executed in the form of a flange running the whole width of a front part of an outer side of the gable plate 112 as well as on the side edges 129, 131. This ensures uniform load transfer and good sealing properties between sealing surface 186 and the filter bank grid 200. Other forms of execution of the flange are of course possible, for example in order to increase structural stability of the flange.

The filter frame is assembled as follows. The front plate 110, comprising the grooves 126 at the two opposite ends 122, 124 thereof is provided. The first and second gable plates 112 are provided and mounted at the front plate 110. For each gable plate 112 the mounting includes inserting a front edge portion 128 of the gable plate 112 into a respective groove 126, and forcing the retainment member 144 into engagement with the corresponding retainment member 146 of the front plate 110. Thereby a part of the filter frame 102 which is ready to receive the media packs 104 has been assembled. In order to complete the assembling process to a complete filter assembly 100, the next step thus is to mount the media packs 104 including backing nets 108, and then the plate elements 116 of the rear plate 114 are mounted, wherein they are forced into engagement with the rear edge portions 136 such that snap-lock elements 192 of the gable plates 112 snaps into a locking position in the corresponding part in each rear plate 116. As mentioned earlier, the filter assembly is now ready to be handled and could for example be transported to a different location without the necessity of any temporary securing means or similar. And then, in a last step of assembling the filter frame, an adhesive is used to seal and fixate the filter frame 102. The mere presence of adhesive in the spaces between the different constructional details will prevent the snap-lock elements from leaving their locked position, which adds rigidity to the structure even before the adhesive has cured. Obviously, curing will further increase rigidity and stability of the structure by bonding the gable plates 112 and the front plate 110 together. Since the retainment member 144 will be glued into engagement with the corresponding retainment member 146 the snap-lock connection and press fit connection respectively will become even stronger. Other modes of mounting are obviously also possible, such as intermediate supply of adhesive.

Thereafter, the filter frame assembly is inserted and secured to the filter bank grid 200, typically the filter frame assembly is clamped to the filter bank grid 200 by means of a plastic or metal clamp which is fixed to the filter bank grid by means of a bolt and a fly nut or similar. Thereby, the filter frame assembly can be tightly squeezed between the clamp and the grid 200 without the use of through bolts or similar that would jeopardize tightness of the construction. When doing so, both the abutment surface 184 of the gable plate 112 and the sealing surface 186 of the front plate 110 are pressed against the filter bank grid 200 such that sealing is assured. When in use, the forces acting on the filter media 106 due to the air flow therethrough will be transmitted directly from the gable plates 112 to the filter bank grid 200 and no major forces will be transmitted from the gable plates 112 to the front plate 110 such that the sealing properties between the gable plates 112 and the front plate 110 can be maintained at all times.

Finally, it is realized that the use of structure of the present invention with retainment members 144, 146 is a more user-oriented solution than known prior art constructions since it allows for a user to handle the frame assembly without the need of any temporary securing means or similar before the adhesive has been added and allowed to cure. Further, the provision of an abutment surface on the gable plate and a sealing surface on the front plate provides a construction with increased load bearing capacity while at same time improving sealing properties of the filter frame assembly. It should also be noted that the positions of the retainment member and the complimentary retainment member could be altered, e.g. the snap-lock could just as well be arranged on the front edge of the gable plate and the protrusion on the side edge of the gable plate and the corresponding goes for the complimentary parts of the front plate.

## Claims

1. A V-type filter frame (102) for receiving a filter media pack (104), said V-type filter frame (102) being arranged to be mounted to a filter bank grid (200), the V-type filter frame (102) comprising first and second gable plates (112) and a front plate (110) coupled to the gable plates (112), wherein the front plate (110) comprises a sealing surface (186) arranged to abut the filter bank grid (200), said gable plates (112) each comprising a front edge portion (128) and an opposite rear edge portion (136) and an inner surface (180) and an outer surface (182) and further comprising an abutment surface (184) extending outwardly from said outer surface (182) arranged to abut a filter bank grid (200) when mounted thereto, the abutment surface (184) is provided in the form of a flange extending along said outer surface (182) along the length of the front edge portion (128).

2. A V-type filter frame (102) according to claim 1, wherein the abutment surface (184) is additionally extending along at least one short side (129, 131) of the gable plate (112).

3. A V-type filter frame (102) according to claim 1, wherein the gable plate (112) has at least one V-shaped plate portion (134) extending between the front edge portion (128) and the opposite rear edge portion (136) of the gable plate (112), with the mouth of the V shaped portion (134) facing the front edge portion (128), said at least one V-shaped portion (134) being defined by a channel arranged to receive a gable (140) of a media pack (104).

4. A V-type filter frame (102) according to any one of the preceding claims, wherein the sealing surface (186) of the front plate (110) is arranged to be substantially flush with the abutment surface (184) of the gable plate (112).

5. A V-type filter frame (102) according to any one of the preceding claims, wherein a sealing member (188) is provided at the sealing surface (186) of the front plate (110).

6. A V-type filter frame (102) according to claim 5, wherein the sealing member (188) comprises a compressible sealing strip.

7. A V-type filter frame (102) according to any of the preceding claims, wherein the sealing surface (186) of the front plate (110) is arranged outwardly adjacent the abutment surface (184) of the gable plate (112).

8. A V-type filter frame (102) according to any of claims 1-7, wherein the front plate (110) is coupled to the gable plates (112) by means of a snap-lock element (148).

9. A V-type filter frame (102) according to any of claims 1-8, wherein the front plate (110) is coupled to the gable plates (112) by means of an adhesive.

10. A V-type filter frame (102) according to any of claims 1-9, wherein a rear plate element (116) is engaged with rear edge portions (136) of the first and second gable plates (112) by means of a snap lock element (192).

11. A filter frame assembly comprising a V-type filter frame (102) according to any of claims 1-10 and at least one media pack (104) arranged in the filter frame (102).

12. A method of securing a filter frame assembly to a filter bank (300) comprising the following steps:
- providing a filter bank grid (200) comprising at least one opening for a filter frame (102);
- providing a V-type filter frame (102) comprising a front plate (110) and first and second gable plates (112) mounted to the front plate (110), wherein said gable plates (112) comprises an abutment surface (184) extending outwardly from an outer surface (182) thereof and wherein the front plate (110) comprises a sealing surface (186);
- providing a media pack (104) in the filter frame (102);
- mounting said filter frame (102) with media pack (104) to the filter bank grid (200) such that the abutment surface (184) of the gable plates (112) and the sealing surface (186) of the front plate (110) abut the filter bank grid (200).

## Patentansprüche

1. V-Typ-Filterrahmen (102) zur Aufnahme eines Filtermediumpakets (104), wobei der V-Typ-Filterrahmen (102) angeordnet ist, um an einem Filterbankraster (200) montiert zu werden, wobei der V-Typ-Filterrahmen (102) erste und zweite Gabelplatten (112) und eine an die Gabelplatten (112) gekoppelte Frontplatte (110) umfasst, wobei die Frontplatte (110) eine dichtende Oberfläche (186) umfasst, die angeordnet ist, um am Filterbankraster (200) anzuliegen, wobei die Gabelplatten (112) jeweils einen Vorderkantenabschnitt (128) und einen gegenüberliegenden Hinterkantenabschnitt (136) und eine Innenfläche (180) und eine Außenfläche (182) und ferner eine Anlagefläche (184) umfassen, die sich von der Außenfläche (182) nach außen erstreckt, die angeordnet ist, um an einem Filterbankraster (200) anzuliegen, wenn sie daran montiert ist, wobei die Anlagefläche (184) in Form eines Flansches bereitgestellt ist, der sich entlang der Außenfläche (182) entlang der Länge des Vorderkantenabschnitts (128) erstreckt.

2. V-Typ-Filterrahmen (102) nach Anspruch 1, wobei die Anlagefläche (184) sich zusätzlich entlang mindestens einer kurzen Seite (129, 131) der Gabelplatte (112) erstreckt.

3. V-Typ-Filterrahmen (102) nach Anspruch 1, wobei die Gabelplatte (112) mindestens einen V-förmigen Plattenabschnitt (134) aufweist, der sich zwischen dem Vorderkantenabschnitt (128) und dem gegenüberliegenden Hinterkantenabschnitt (136) der Gabelplatte (112) erstreckt, wobei die Mündung des V-förmigen Abschnitts (134) zum Vorderkantenabschnitt (128) zeigt, wobei der mindestens eine V-förmige Abschnitt (134) durch einen Kanal definiert ist, der angeordnet ist, um eine Gabel (140) eines Mediumpakets (104) aufzunehmen.

4. V-Typ-Filterrahmen (102) nach einem der vorstehenden Ansprüche, wobei die dichtende Oberfläche (186) der Frontplatte (110) angeordnet ist, um im Wesentlichen mit der Anlagefläche (184) der Gabelplatte (112) bündig zu sein.

5. V-Typ-Filterrahmen (102) nach einem der vorstehenden Ansprüche, wobei ein dichtendes Element (188) an der dichtenden Oberfläche (186) der Frontplatte (110) bereitgestellt ist.

6. V-Typ-Filterrahmen (102) nach Anspruch 5, wobei das dichtende Element (188) einen komprimierbaren dichtenden Streifen umfasst.

7. V-Typ-Filterrahmen (102) nach einem der vorstehenden Ansprüche, wobei die dichtende Oberfläche (186) der Frontplatte (110) außen angrenzend an die Anlagefläche (184) der Gabelplatte (112) angeordnet ist.

8. V-Typ-Filterrahmen (102) nach einem der Ansprüche 1-7, wobei die Frontplatte (110) mithilfe eines Schnappverschlusselements (148) mit den Gabelplatten (112) gekoppelt ist.

9. V-Typ-Filterrahmen (102) nach einem der Ansprüche 1-8, wobei die Frontplatte (110) mithilfe eines Haftmittels (148) mit den Gabelplatten (112) gekoppelt ist.

10. V-Typ-Filterrahmen (102) nach einem der Ansprüche 1-9, wobei ein Rückenplattenelement (116) mit Hinterkantenabschnitten (136) der ersten und zweiten Gabelplatten (112) mithilfe eines Schnappverschlusselements (192) in Eingriff genommen ist.

11. Filterrahmengruppe, umfassend einen V-Typ-Filterrahmen (102) nach einem der Ansprüche 1-10 und mindestens ein Mediumpaket (104), das im Filterrahmen (102) angeordnet ist.

12. Verfahren zum Befestigen einer Filterrahmengruppe an einer Filterbank (300), umfassend die folgenden Schritte:
- Bereitstellen eines Filterbankrasters (200), umfassend mindestens eine Öffnung für einen Filterrahmen (102);
- Bereitstellen eines V-Typ-Filterrahmens (102), umfassend eine Frontplatte (110) und erste und zweite Gabelplatten (112), die an der Frontplatte (110) montiert sind, wobei die Gabelplatten (112) eine Anlagefläche (184) umfassen, die sich von einer Außenfläche (182) davon nach außen erstrecken, und wobei die Frontplatte (110) eine dichtende Oberfläche (186) umfasst;
- Bereitstellen eines Mediumpakets (104) im Filterrahmen (102);
- Montieren des Filterrahmens (102) mit dem Mediumpaket (104) am Filterbankraster (200), so dass die Anlagefläche (184) der Gabelplatten (112) und die dichtende Oberfläche (186) der Frontplatte (110) am Filterbankraster (200) anliegen.

## Revendications

1. Cadre filtrant en V (102) pour la réception d'un ensemble de milieu filtrant (104), ledit cadre filtrant en V (102) étant agencé pour être monté sur un réseau de banc de filtres (200), le cadre filtrant en V (102) comprenant des première et deuxième plaques de pignon (112) et une plaque antérieure (110) couplée aux plaques de pignon (112), la plaque antérieure (110) comprenant une surface d'étanchéité (186) agencée pour jouxter le réseau de banc de filtres (200), lesdites plaques de pignon (112) comprenant chacune une partie de bord antérieur (128) et une partie de bord postérieur (136) opposée, et une surface interne (180) et une surface externe (182), et comprenant en outre une surface d'appui (184) s'étendant vers l'extérieur depuis ladite surface externe (182) agencée pour jouxter un réseau de banc de filtres (200) lorsqu'elle est montée sur celui-ci, la surface d'appui (184) se présentant sous forme d'une bride s'étendant le long de ladite surface externe (182) sur la longueur de la partie du bord antérieur (128).

2. Cadre filtrant en V (102) selon la revendication 1, la surface d'appui (184) étant déployée, en outre, le long d'au moins un côté court (129, 131) de la plaque de pignon (112).

3. Cadre filtrant en V (102) selon la revendication 1, la plaque de pignon (112) possédant au moins une partie de plaque en V (134) déployée entre la partie du bord antérieur (128) et la partie de bord postérieur (136) opposée de la plaque de pignon (112), l'embouchure de la partie de plaque en V (134) faisant face à la partie du bord antérieur (128), ladite embouchure de la partie de plaque en V (134) étant définie par une cannelure agencée pour recevoir un pignon (140) d'un milieu filtrant (104).

4. Cadre filtrant en V (102) selon une quelconque des revendications précédentes, la surface d'étanchéité (186) de la plaque antérieure (110) étant agencée pour être substantiellement au ras de la surface d'appui (184) de la plaque de pignon (112).

5. Cadre filtrant en V (102) selon une quelconque des revendications précédentes, un élément d'étanchéité (188) étant placé sur la surface d'étanchéité (186) de la plaque antérieure (110).

6. Cadre filtrant en V (102) selon la revendication 5, l'élément d'étanchéité (188) comprenant une bande d'étanchéité compressible.

7. Cadre filtrant en V (102) selon une quelconque des revendications précédentes, la surface d'étanchéité (186) de la plaque antérieure (110) étant agencée vers l'extérieur, et adjacente à la surface d'appui (184) de la plaque de pignon (112).

8. Cadre filtrant en V (102) selon une quelconque des revendications 1 à 7, la plaque antérieure (110) étant couplée aux plaques de pignon (112) par le biais d'un élément de verrouillage à cran (148).

9. Cadre filtrant en V (102) selon une quelconque des revendications 1 à 8, la plaque antérieure (110) étant couplée aux plaques de pignon (112) par le biais d'un adhésif.

10. Cadre filtrant en V (102) selon une quelconque des revendications 1 à 9, un élément de plaque postérieure (116) étant engagée avec les parties de bord postérieur (136) des première et deuxième plaques de pignon (112) à l'aide d'un élément de verrouillage à cran (192).

11. Cadre filtrant comprenant un cadre filtrant en V (102) selon une quelconque des revendications 1 à 10 et au moins un ensemble de milieu filtrant (104) agencé dans le cadre filtrant (102).

12. Méthode de fixation d'un ensemble de cadre filtrant sur un banc de filtres (300) comprenant les étapes suivantes :
- fourniture d'un réseau de banc de filtres (200) comprenant une ouverture pour un cadre filtrant (102) ;
- fourniture d'un cadre filtrant en V (102) comprenant une plaque antérieure (110) et des première et deuxième plaques de pignon (112) montées sur la plaque antérieure (110), lesdites plaques de pignon (112) comprenant une surface d'appui (184) s'étendant vers l'extérieur depuis une surface externe (182) de celle-ci, et la plaque antérieure (110) comprenant une surface d'étanchéité (186) ;
- fourniture d'un milieu filtrant (104) dans le cadre filtrant (102) ;
- montage dudit cadre filtrant (102) avec le milieu filtrant (104) sur le réseau de banc de filtres (200), de sorte que la surface d'appui (184) des plaques de pignon (112) et la surface d'étanchéité (186) de la plaque antérieure (110) jouxtent le réseau de banc de filtres (200).
